Europäisches Patentamt

European Patent Office

Office européen des brevets

Numéro de publication: **0 367 693**
A1

# DEMANDE DE BREVET EUROPEEN

Numéro de dépôt: **89420417.1**

Int. Cl.5 **H02P 8/00**

Date de dépôt: **25.10.89**

Priorité: **25.10.88 FR 8813907**

Date de publication de la demande:
**09.05.90 Bulletin 90/19**

Etats contractants désignés:
**CH DE ES FR GB IT LI SE**

Demandeur: **JANIN, Paul**
**19, rue Dufour**
**F-69230 Saint-Genis-Laval(FR)**

Demandeur: **Forsberg, Per-Anders**
**19, rue Dufour**
**F-69230 Saint-Genis-Laval(FR)**

Inventeur: **Forsberg, Per-Anders**
**19, rue Dufour**
**69230 Saint-Genis-Laval(FR)**

Procédé pour entraîner l'arrêt des moteurs pas à pas.

Procédé apte à entraîner l'arrêt d'un moteur pas à pas, en particulier en cas d'anomalie.

Un organe centrale (26) de commande et de calcul mesure en permanence la fréquence de découpage en palier du courant dans chacun des inducteurs (6, 7). En cas d'anomalie, le programme de génération des signaux périodiques de commande est déconnecté, celui de découpage étant maintenu. La fréquence de découpage oscille alors de part et d'autre d'un seuil (S) de fonctionnement normal. A chaque demi-intervalle (T/2) entre deux traversées successives de ce seuil, le courant inducteur est inversé dans la phase (6 ou 7) correspondante, ce qui freine le moteur et l'arrète au bout de quelques cycles.

Fig.3

EP 0 367 693 A1

# PROCEDE POUR ENTRAINER L'ARRET DES MOTEURS PAS-A-PAS

La présente invention se rapporte à un procédé apte à entraîner l'arrêt d'un moteur pas-à-pas, en particulier en cas de décrochage de ce dernier en raison d'une anomalie.

Un moteur pas-à-pas est un moteur souvent utilisé pour assurer l'entrainement d'équipements mécaniques de précision. Son rotor, ou induit, est équipé d'aimants permanents, et ses enroulements inducteurs, qui sont portés par son stator, sont parcourus par des courants périodiques en forme de signaux carrés ou rectangulaires et décalés dans le temps d'un enroulement, ou phase, à l'autre. Dans le cas des moteurs diphasés par exemple, les deux enroulements inducteurs sont parcourus respectivement par des courants périodiques, souvent en forme de signaux carrés ou rectangulaires, déphasés d'un quart de période d'une des deux phases à l'autre.

Pour les moteurs pas-à-pas les plus répandus actuellement, chaque palier de courant inducteur est avantageusement maintenu constant grace à un "découpage" en palier de ce courant inducteur, ou courant de phase, réalisé en dents de scie entre deux seuils d'intensité prédéfinis et très proches l'un de l'autre. En cas d'anomalie, par exemple en cas de "décrochage" du moteur - qui n'est alors plus commandé par les signaux adéquats - dû par exemple à un "point dur" dans l'équipement mécanique entraîné ou à un incident sur le réseau électrique d'alimentation, ou en cas de fonctionnement du moteur en décélération forcée, il y a naissance d'une surtension dans les enroulements inducteurs lors de la coupure des interrupteurs électroniques servant au hachage du courant d'alimentation de ces inducteurs, de sorte que le courant des inducteurs diminue alors plus lentement que dans les conditions normales de fonctionnement, ce qui entraîne une diminution de la fréquence dudit "découpage" de ce courant.

En cas de décrochage du moteur, ce dernier vient à tourner de manière incontrôlée, ce qui peut avoir des conséquences dommageables sur l'équipement mécanique qu'il entraîne, en provoquant par exemple des collisions mécaniques que le moteur pas-à-pas avait justement pour but d'éviter. Pour enrayer ce danger, il a déjà été proposé de détecter la surtension précitée, apparaissant hors programme dans les inducteurs en cas de décrochage du moteur, en d'entraîner en conséquence la coupure immédiate des interrupteurs électroniques d'alimentation de ces inducteurs, et par suite l'arrêt du moteur. Cet arrêt n'est cependant pas immédiat, et n'a en général lieu qu'au bout d'au moins plusieurs secondes, de sorte que les risques d'accident précités subsistent malgré tout. Quelle que soit la cause de la décision d'arrêter le moteur, le délai d'arrêt est long du fait des forces d'inertie en jeux.

L'invention qui vise à remédier à cet inconvénient a pour objet un procédé permettant d'entraîner l'arrêt quasi instantané d'un moteur pas à pas. Ce procédé consiste à détecter une anomalie, ou à répondre à un signal commandant l'arrêt, à déconnecter le programme de création des signaux périodiques de courant inducteur sans déconnecter celui de découpage en palier de ce courant puis, pour chaque phase d'enroulement inducteur, à mesurer l'intervalle de temps entre le moment où la surtension anormale créée dans cette phase par le décrochage disparaît et celui où elle réapparaît ensuite, à inverser ensuite, après un intervalle de temps sensiblement égal à la moitié $T/2$ de cet intervalle mesuré $T$, le courant inducteur dans les enroulements de cette phase, à mesurer de même l'intervalle de temps $T'$ entre ce dernier moment où la surtension anormale était réapparue et celui où elle disparaît à nouveau, à inverser ensuite à nouveau, au bout d'un nouvel intervalle de temps sensiblement moitié $T'/2$, le courant dans les enroulements de cette phase, et ainsi de suite jusqu'à arrêt complet du moteur.

Selon une forme avantageuse de ce procédé, la fréquence de découpage du courant inducteur est mesurée en permanence pour chacune des phases. Cette fréquence sert d'une part, en corrélation avec le programme de formation des signaux périodiques, à détecter l'anomalie de fonctionnement du moteur, et elle sert d'autre part à déterminer l'instant de passage entre une surtension normale et anormale, et vice-versa, par définition d'un seuil de fréquence de découpage S. Si la fréquence de découpage est supérieure à ce seuil, on a affaire à une surtension "normale", qui est d'ailleurs la surtension que, en corrélation toutefois avec le programme, l'on trouve en régime de fonctionnement normal du moteur. Si cette fréquence est au contraire inférieure à ce seuil S, on a affaire à une surtension "anormalement" élevée.

De toute façon, l'invention sera bien comprise, et ses avantages et autres caractéristiques ressortiront, lors de la description suivante d'un exemple non limitatif de mise en oeuvre de ce procédé d'arrêt d'un moteur pas-à-pas, en référence au dessin schématique annexé dans lequel :

- Figure 1 montre les courbes de variation du flux magnétique, en fonction du temps, dans les enroulements inducteurs de chacune des deux phases du moteur ;

- Figure 2 est une vue agrandie du détail A de la figure 1 ; et

- Figure 3 est un schéma synoptique d'ensemble de l'installation.

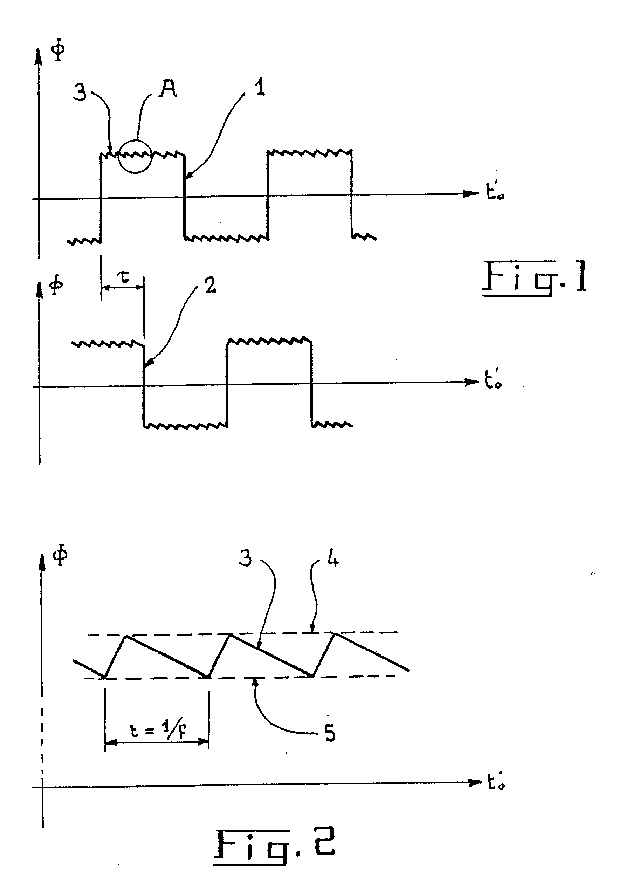

En se reportant tout d'abord à la figure 1, les courbes de variation du flux magnétique Φ en fonction du temps $t_0$ dans les deux enroulements inducteurs, ou autrement dit dans les deux phases, d'un moteur pas-à-pas de type diphasé, sont rappelées. Comme on le voit sur le dessin, il s'agit dans cet exemple de signaux carrés, et la courbe 1 relative à la première phase est décalée, par rapport à la courbe 2 relative à la deuxième phase, d'une valeur τ égale à un quart de période des signaux carrés et représentant un demi-pas électrique du moteur.

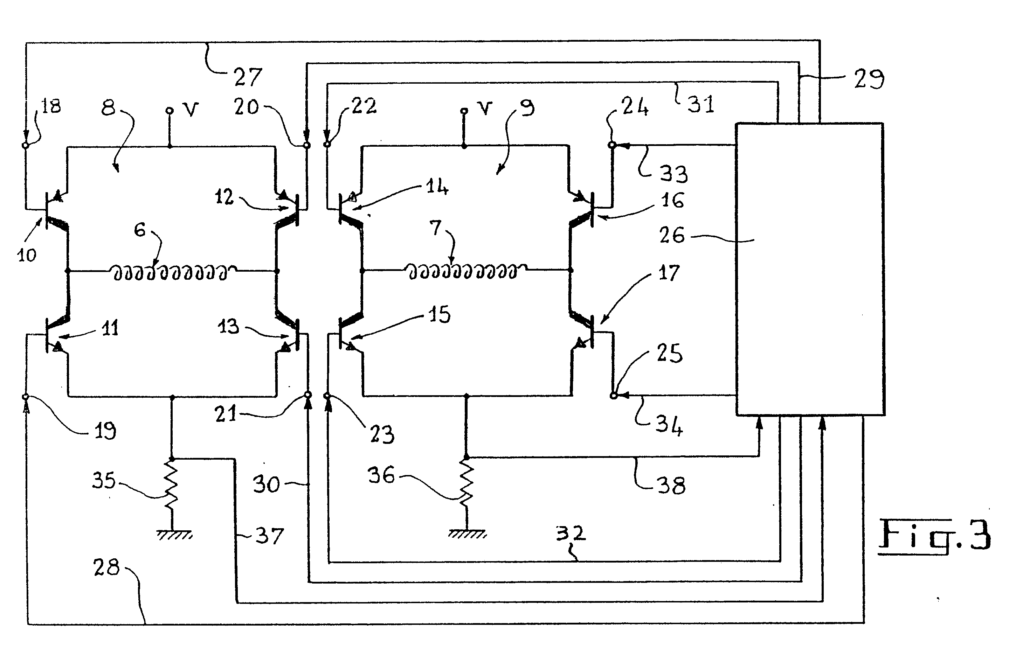

De manière aujourd'hui très classique, ces signaux carrés sont créés en alimentant chacune des deux phases par l'intermédiaire d'un pont de transistors (ou autres interrupteurs électroniques) en "H", sous commande programmée provenant d'un séquenceur. Afin d'éviter l'utilisation de résistances de limitation de courant, il est usuel de maintenir chaque palier 3 de flux, c'est à dire de courant, au moyen d'un découpage en dents de scie, représenté en vue agrandie sur la figure 2, le flux Φ (donc le courant) étant maintenu entre deux seuils haut 4 et bas 5 très rapprochés l'un de l'autre.

Le programme relatif à ce découpage en palier est lui-aussi fourni pas le séquenceur précité, mais la période t (ou la fréquence f) de découpage est dépendante de la surtension dans les enroulements inducteurs relatifs à la phase considérée : plus la surtension est grande, plus cette période t est grande, ou autrement dit plus la fréquence de découpage f est faible. Au cas où une des phases, en raison par exemple d'un phénomène de décrochage ou en raison d'une auto-décélération du moteur, est le siège d'une surtension anormalement grande, la fréquence de découpage vient à baisser en dessous d'un seuil déterminé, ce qui permet de détecter cet état de décrochage ou cet état d'auto-décélération.

La figure 3 est un schéma synoptique de l'installation de mise en oeuvre de l'invention, dans le cas d'un moteur diphasé, à deux enroulements inducteurs 6 et 7, l'enroulement 6 étant celui relatif à la phase 1 (courbe 1 sur la figure 1) et l'enroulement 7 étant celui relatif à la phase II (courbe 2 sur la figure 2). Chacun de ses enroulements 6 et 7 est classiquement alimenté, entre la borne d'alimentation V et la masse, par un pont en H, respectivement 8 et 9, à chacun quatre transistors de commutation, respectivement les transistors 10 à 13 et les transistors 14 à 17. Les bornes d'entrée, respectivement 18 à 25, des circuits de commande de ces transistors 10 à 17 sont connectés à l'organe central de commande et de calcul 26 par des connexions respectives 27 à 34. En série avec chacun des deux ponts 8 et 9 sont en outre prévues deux résistances de mesure, respectivement 35 et 36, et les tensions aux bornes de ces deux résistances sont transmises à l'organe central 26 au moyen des connexions respectives 37 et 38. Ces deux tensions permettent à l'ordinateur 26 de calculer la fréquence f de découpage en palier précitée, car celle-ci, de même que la tension sur 35 ou 36, est directement dépendante de la surtension dans les enroulements respectifs 6 ou 7.

Le dispositif qui vient d'être décrit fonctionne de la manière suivante :

En régime de fonctionnement normal, le moteur pas-à-pas à enroulements diphasés 6 et 7 fonctionne conformément aux diagrammes des figures 1 et 2 ou en micropas, en particulier, la fréquence de découpage f précitée est supérieure à un seuil défini S, en mémoire dans l'ordinateur 26, qui lui-même mesure en permanence, pour chaque phase, cette fréquence f et la compare à ce seuil S.

Supposons maintenant qu'il se produise un "décrochage" du moteur, en raison par exemple d'un "point dur" dans l'équipement mécanique entraîné ou d'une perturbation de la tension d'alimentation V. Il se produit dans un tel cas immédiatement une surtension dans les enroulements 6 et 7. Cette surtension entraîne une baisse anormale, c'est à dire non conforme au programme, de la fréquence de découpage f en dessous du seuil S, ce que détecte l'ordinateur central 26. En fonctionnement normal, c'est l'une des deux phases électriques dont le courant diminue lors de la coupure des interrupteurs électroniques. Pour détecter l'anomalie, on utilisera la phase électrique pour laquelle les niveaux programmés du courant sont en croissance par palier de micropas ou, dans le cas de pas entier, le phase électrique pour laquelle, à l'instant considéré, on se trouve dans la première moitié de chaque carré (voir figure 1). Tous les 1/4 de cycles d'alimentation, on change la phase servant à ce test. L'organe central 26 commande alors aussitôt la déconnection du programme de création des signaux carrés 1 et 2, ou des micropas, sans toutefois déconnecter le programme de création de découpage en palier, de sorte que les courants dans les inducteurs 6 et 7 sont maintenus, tandis que les mesures de fréquence de découpage f continuent elles aussi. Lors, ou après la déconnection du programme, si l'alimentation se faisant par des niveaux de courant variables, générant des micropas, on ferait en sorte de maintenir des niveaux de courant fixes comme dans figure 1.

Le moteur continuant sa rotation, la positon des pôles continue à varier avec cette rotation, de sorte que la fréquence f vient à dépasser à nouveau le seuil S à un instant to, puis elle baisse jusqu'à passer à nouveau sous ce seuil S à un instant t1.

L'ordinateur 26 mesure l'intervalle de temps :

$T = t1 - t_0$

et il commande l'inversion, dans la phase considérée du moteur, alternativement phase I dans l'enroulement 6 ou phase II dans l'enroulement 7 du courant inducteur au temps

$t1 + T/2$ ce qui entraîne une auto-décélération du moteur.

La rotation du moteur continue, de sorte qu'à un instant ultérieur t2, supérieur à $t1 + T/2$, la fréquence f pour l'enroulement considéré, 6 ou 7, vient à dépasser à nouveau le seuil S. L'ordinateur mesure à nouveau l'intervalle de temps :

$T' = T2 - t1$

et il commande comme précédemment l'inversion dans cette phase, I ou II, du courant inducteur au temps :

$t2 + T'/2$

ce qui entraîne une nouvelle auto-décélération du moteur, et ainsi de suite jusqu'à l'arrêt complet de ce moteur au bout de quelques cycles indentiques au dernier cycle qui vient d'être décrit. Le temps nécessaire à cet arrêt complet dépend de l'inertie du moteur et de celle de l'équipement qui l'entraîne, mais il est de toute façon très inférieur à celui consécutif à l'arrêt total de la commande de fermeture des interrupteurs électroniques des ponts en H, qui était la méthode généralement utilisée jusqu'à présent. Pour fixer les idées, il peut être de l'ordre de plusieurs dizaines de fois inférieur, de sorte qu'en pratique, l'arrêt du moteur pas à pas est quasi instantané.

Comme il va de soi, l'invention n'est pas limitée à l'exemple de réalisation qui vient d'être décrit. Le procédé est applicable quel que soit le nombre de phases du moteur. Il n'est pas obligatoire d'utiliser la mesure de la fréquence de découpage en palier pour détecter les surtensions non programmés dans les enroulements inducteurs, et un autre effet caractéristique d'une telle surtension anormale pourrait tout aussi bien être utilisé pour la mise en oeuvre de la présente invention. Bien entendu, l'invention n'est pas limitée à une commande périodique du moteur par signaux carrés ou rectangulaires ; elle s'applique aussi bien au cas d'autres modes de commande périodiques, par exemple ceux utilisant des paliers successifs en forme de gradins.

Le procédé n'est pas limité aux cas d'anomalies de fonctionnement, il peut être utilisé pour arrêter un moteur pas à pas en un temps réduit, après par exemple, détection d'une butée.

signal commandant l'arrêt, à déconnecter le programme de création des signaux périodiques (1, 2) de courant inducteur sans déconnecter celui de découpage (3) de ce courant, puis, pour chaque phase (I, II) d'enroulement inducteur (6, 7), à mesurer l'intervalle de temps (T) entre l'instant ($t_0$) où la surtension anormale créée dans cette phase (I ou II) disparaît et celui ($t_1$) où elle réapparaît ensuite, à inverser alors, après un nouvel intervalle de temps sensiblement égal à la moitié (T/2) de cet intervalle mesuré (T), le courant inducteur dans les enroulements (6 ou 7) de cette phase (I ou II), à mesurer de même l'intervalle de temps (T') entre ce dernier moment ($t_1$) où la surtension anormale était réapparue et celui ($t_2$) où elle disparaît à nouveau, à inverser ensuite à nouveau, au bout d'un nouvel intervalle de temps sensiblement moitié (T'/2), le courant inducteur dans les enroulements (6 ou 7) de cette phase (I ou II), et ainsi de suite jusqu'à arrêt complet du moteur.

2 - Procédé de sécurité selon la revendication 1, caractérisé en ce qu'il consiste à mesurer en permanence, pour chacune des phases (I, II) du moteur, la fréquence (f) de découpage du courant inducteur en palier (3), et à utiliser la valeur de cette fréquence f() pour d'une part, en corrélation avec le programme de création desdits signaux périodiques (1, 2), détecter les anomalies de fonctionnement du moteur, et d'autre part détecter l'instant ($t_1$) de passage d'une surtension anormale, et vice-versa ($t_0$, $t_2$), par définition d'un seuil de fréquence de découpage (S) déterminé de sorte que si cette fréquence de découpage (f) est supérieure à ce seuil (S), il s'agit d'une surtension normale, tandis que si elle est inférieure à ce seuil (S), il s'agit d'une surtension anormale.

## Revendications

1 - Procédé apte à entraîner d'un moteur pas à pas, caractérisé en ce qu'il consiste à détecter un

$\underline{\text{Fig.1}}$

$\underline{\text{Fig.2}}$

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EDN-ELECTRICAL DESIGN NEWS vol. 32, no. 18, 3 septembre 1987, pages 227-234, Newton, MA, USA; D. ARTUSI et al.: "Solid-state devices ease task of designing brushless dc motors" * page 234, lignes 9-26 * | | H 02 P    8/00 |

DOMAINES TECHNIQUES RECHERCHES (Int. Cl.5)

H 02 P    8/00
H 02 P    7/00
H 02 P    6/00
H 02 P    3/00

Le présent rapport a été établi pour toutes les revendications

| Lieu de la recherche | Date d'achèvement de la recherche | Examinateur |
|---|---|---|
| BERLIN | 26-01-1990 | LEOUFFRE M. |